# EUROPÄISCHE PATENTSCHRIFT

(11) **EP 0 804 696 B1**
(45) Veröffentlichungstag und Bekanntmachung des Hinweises auf die Patenterteilung: **15.09.1999**
(21) Anmeldenummer: 95942199.1
(22) Anmeldetag: 23.12.1995
(51) Int. Cl.: F16K 17/10, F16K 17/04

(54) **VORGESTEUERTES PROPORTIONAL-DRUCKBEGRENZUNGSVENTIL**
PILOT OPERATED PROPORTIONAL PRESSURE LIMITATION VALVE
SOUPAPE PILOTEE PROPORTIONNELLE DE LIMITATION DE PRESSION

(30) Priorität: 20.01.1995 DE 19501683
(43) Veröffentlichungstag der Anmeldung: 05.11.1997
(73) Patentinhaber: Mannesmann Rexroth AG, 97816 Lohr am Main (DE)
(72) Erfinder: WÖLFGES, Hans, D-97816 Lohr (DE)
(86) Internationale Anmeldenummer: EP9505124
(87) Internationale Veröffentlichungsnummer: WO9622481

(56) Entgegenhaltungen:
- DE-A- 3 824 089
- FR-A- 2 362 325

## Beschreibung

Die vorliegende Erfindung betrifft ein vorgesteuertes Proportional-Druckbegrenzungsventil gemäß dem Oberbegriff des Patentanspruchs 1.

Vorgesteuerte Proportional-Druckbegrenzungsventile sind bekannt. Ein bekanntes Proportional-Druckbegrenzungsventil ist in dem Buch "Der Hydraulik Trainer", Band 2, herausgegeben von der Mannesmann Rexroth GmbH, Lohr/Main, beschrieben, und zwar auf den Seiten B20 und B21.

Aus der DE 38 24 089 A1 ist ein vorgesteuertes Proportional-Druckbegrenzungsventil bekannt, das die Merkmale aus dem Oberbegriff des Patentanspruchs 1 aufweist und bei dem eine Steueröldüse im Hauptkolben angeordnet ist. Um einen sehr kleinen einstellbaren Druck zu erhalten, ist der Ausgang der Steueröldüse zur Zuführung von Steueröl zu einem Vorsteuerventil unmittelbar aus dem Hauptkolben durch Verbindungsmittel herausgeführt.

Das Proportional-Druckbegrenzungsventil gemäß der DE 38 24 089 A1 neigt unter Umständen im Bereich kleiner Volumenströme mit hohem Druck zum Schwingen. Deshalb ist in dem Ventil gemäß der DE 38 24 089 A1 bereits eine Dämpfungsdüse in dem Hauptkolben vorgesehen. Da aber in dem oben genannten Bereich der Regelhub des Hauptkolbens und somit auch das über die Dämpfungsdüse aus dem Steuerraum verdrängte Steuerölvolumen sehr klein ist, ist die Dämpfungswirkung der Dämpfungsdüse auf den Regelhub des Hauptkolbens zu schwach und kann in diesem Bereich nicht verhindern, daß das Ventil schwingt.

Der vorliegenden Erfindung liegt daher die Aufgabe zugrunde, die Nachteile des Standes der Technik zu vermeiden und insbesondere auch im Bereich kleiner Volumenströme mit hohem Druck eine ausreichende Dämpfung des Hauptkolbens zu bewirken, um insbesondere zu verhindern, daß das Ventil schwingt.

Zur Lösung dieser Aufgabe sieht die vorliegende Erfindung bei einem vorgesteuerten Proportional-Druckbegrenzungsventil gemäß dem Oberbegriff des Patentanspruchs 1 die im kennzeichnenden Teil dieses Patentanspruchs genannten Merkmale vor.

Aus der FR-A 2 362 325 ist zwar schon ein Druckbegrenzungsventil bekannt, bei dem die Bewegung des Ventilkolbens in Abhängigkeit von dessen Hub unterschiedlich stark gedämpft wird. Dieses Druckbegrenzungsventil ist jedoch ein direktgesteuertes Ventil. Sein an die eine Stirnseite des Ventilkolbens angrenzender Federraum, der einen größeren Durchmesser als der Ventilkolben hat, ist als Dämpfungskammer ausgebildet und über eine Drosselbohrung in der Wand des Federraumes mit einem unter Atmosphärendruck stehenden Ölvorratsbehälter fluidisch verbunden. Der Ventilkolben trägt eine Scheibe, die mit der Wand des Federraumes einen Ringspalt bildet und in einem Bereich kleiner Hübe des Ventilkolbens die Drosselbohrung teilweise überdeckt. Die Stärke der Dämpfung ist hier im wesentlichen durch den Überdeckungsgrad der Drosselbohrung und durch die Breite des Ringspaltes bestimmt.

Im Bereich großer Hübe des Ventilkolbens wird bei einer Bewegung des Ventilkolbens in Öffnungsrichtung eine größere Ölmenge über den Ringspalt zwischen der Scheibe und der Wand des Federraumes und eine kleinere Ölmenge über die ganz offene Drosselbohrung verdrängt. Hier soll die Dämpfung geringer sein, weshalb der Ringspalt nicht zu klein sein darf. Deshalb ist nur eine begrenzte Erhöhung des Gesamtwiderstandes der Dämpfungsdüsenmittel und damit des Dämpfungsgrades im Bereich kleiner Hübe des Ventilkolbens möglich.

Demgegenüber enthalten die Dämpfungsmittel eines erfindungsgemäßen vorgesteuerten Proportional-Druckbegrenzungsventils im Bereich kleiner Hübe des Hauptkolbens einen hydraulischen Widerstand, der nach dem Prallplattenprinzip arbeitet und sehr groß gemacht werden kann. Verläßt der Hauptkolben den Bereich kleinerer Hübe, so öffnet sich die Radialbohrung zu dem breiten Ringspalt und der hydraulische Widerstand der Dämpfungsdüsenmittel verringert sich.

Bevorzugte Ausgestaltungen der Erfindung ergeben sich aus den Unteransprüchen.

Weitere Vorteile, Ziele und Einzelheiten der Erfindung ergeben sich aus der Beschreibung eines Ausführungsbeispiels eines erfindungsgemäßen vorgesteuerten Proportional-Druckbegrenzungsventils anhand der Zeichnung. Es zeigen
- Figur 1: schematisch einen Längsschnitt durch das Ausführungsbeispiel und
- Figur 2: schematisch ein vorgesteuertes Proportional-Druckbegrenzungsventil gemäß dem Stand der Technik.

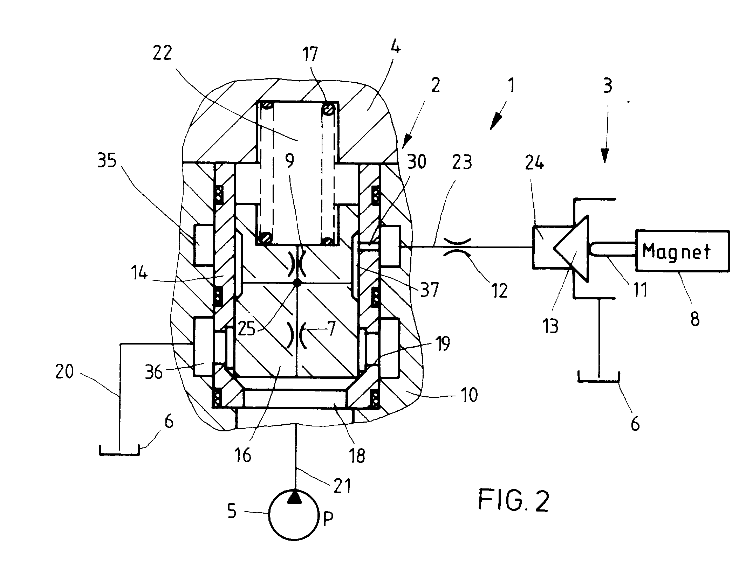

Das Ventil 1 nach Figur 2 besteht aus einem Hauptventil 2 sowie einem Pilot- oder Vorsteuerventil 3. Eine Pumpe ist mit 5 und ein Tank mit 6 bezeichnet. Das Vorsteuerventil 3 weist einen Proportionalmagneten 8 auf, der über einen Magnetstößel 11 auf einen Vorsteuerkegel 13 einwirken kann.

Das Hauptventil 2 weist als Hohlteil eine in eine mit einem Deckel 4 verschlossene Ausnehmung eines Gehäuses 10 eingesetzte Büchse 14 mit einem darin angeordneten Hauptkolben 16 auf, der durch eine Schließfeder 17 gegen seinen Sitz vorgespannt ist. In der Büchse 14 sind eine axial verlaufende Einströmbohrung 18 sowie mehrere radial verlaufende Ausströmbohrungen 19 ausgebildet. Die Pumpe 5 steht über eine Leitung 21 mit der Einströmbohrung 18 in Verbindung, während die Ausströmbohrungen 19 über eine Leitung 20 mit dem Tank 6 in Verbindung stehen. Der Druck in der Einströmbohrung 18 beaufschlagt den Hauptkolben 16 in Öffnungsrichtung.

Zur Erzeugung eines Vorsteuerdruckes ist die Einströmbohrung 18 über eine Steueröldüse 7 und eine Dämpfungsdüse 9 mit dem Feder- oder Steuerraum 22 verbunden. Ein Druck in dem Steuerraum 22 beaufschlagt den Hauptkolben 16 in Schließrichtung. Der Verbindungspunkt 25 der beiden Düsen 7 und 9 steht über eine weitere Düse 12, die ebenfalls die Funktion einer Dämpfungsdüse besitzt, mit einem Druckraum 24 des Vorsteuerventils '3 in Verbindung. Die Dämpfungsdüse 12 ist in einer Leitung 23 angeordnet, die den Druckraum 24 des Vorsteuerventils 3 über einen in der Büchse 14 befindlichen radialen Kanal 30 und einen am Außenumfang des Hauptkolbens 16 angeordneten ersten Ringkanal 37 mit dem Verbindungspunkt 25 verbindet.

Ein zweiter Ringkanal 35 ist am Außenumfang der Büchse 14 in dem Gehäuse 10 angeordnet und steht über den radialen Kanal 30 mit dem ersten Ringkanal 37 in Verbindung. Die Ausströmbohrungen 19 öffnen sich zu einem dritten Ringkanal 36 hin, der ebenfalls am Außenumfang der Büchse 14 in dem Gehäuse 10 angeordnet ist und über die Leitung 20 mit dem Tank 6 in Verbindung steht. Steigt der Druck in der Pumpenleitung 21 und damit in der Einströmbohrung 18 auf den am Vorsteuerventil 3 eingestellten Wert an, so öffnet dieses. Bedingt durch die Steuerdüse 7 entsteht ein Druckgefälle am Hauptkolben 16. Dieser hebt vom Sitz ab und öffnet die Verbindung von der Pumpe 5 über die Ausströmbohrungen 19 zum Tank 6.

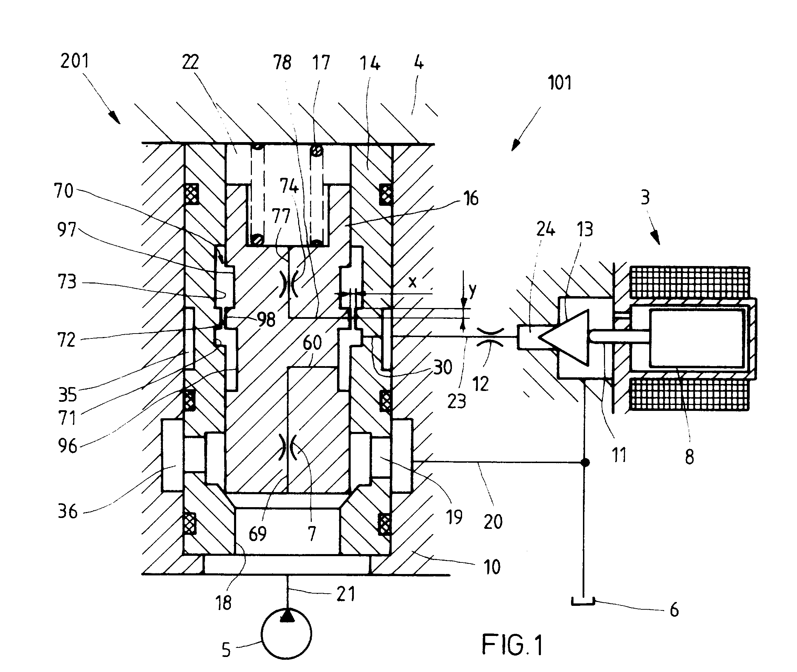

In der folgenden Beschreibung des in Figur 1 gezeigten Ausführungsbeispiels der Erfindung bezeichnen gleiche Bezugszeichen gleiche bzw. ähnliche Elemente wie in der Figur 2. Das in Figur 1 dargestellte erfindungsgemäße vorgesteuerte Proportional-Druckbegrenzungsventil 101 ist wie das in der Figur 2 dargestellte Ventil 1 aus einem Hauptventil 201 und einem Vorsteuerventil 3 aufgebaut. Das Vorsteuerventil 3 ist analog zu dem Vorsteuerventil des bekannten Druckbegrenzungsventils 1 gemäß der Figur 2 aufgebaut. Für die Beschreibung des Vorsteuerventils 3 wird insofern auf die Beschreibung der Figur 2 verwiesen.

Das Hauptventil 201 weist als Hohlteil eine Büchse 14 auf, in der sich ein Hauptkolben 16 befindet. Dieser wird durch eine sich in dem Steuerraum 22 befindliche Schließfeder 17 gegen seinen Sitz vorgespannt. Ist der Hauptkolben 16 vom Sitz abgehoben, so kann über die Ausströmbohrungen 19 Druckmittel von der Pumpe 5 über die Pumpenleitung 21 in den Ringkanal 36 strömen, der über die Leitung 20 mit dem Tank 6 in Verbindung steht.

Zwischen dem Innenumfang der Büchse 14 und dem Außenumfang des Hauptkolbens 16 ist in der Büchse 14 ein Ringkanal 70 angeordnet. In dem Querschnitt der Figur 1 erkennt man, daß der Ringkanal 70 drei Abschnitte 71, 72 und 73 aufweist, die entlang der Längsachse des Hauptventils aufeinanderfolgen. Die einzelnen Kanalabschnitte 71, 72, und 73 werden durch rechtwinklige Kanten begrenzt. Der Ringkanalabschnitt 71 steht über einen radialen Kanal 30 mit dem am Außenumfang der Büchse 14 im Gehäuse 10 ausgebildeten Ringkanal 35 und über die Leitung 23 und die Düse 12 mit dem Vorsteuerventil 3 in Verbindung. Im mittleren Ringkanalabschnitt 72 ist der Innendurchmesser der Büchse 14 wesentlich kleiner als in den auch als Ringnuten anzusehenden Ringkanalabschnitten 71 und 73, jedoch noch geringfügig größer als der Durchmesser des Hauptkolbens 16. Der Hauptkolben 16 besitzt zwei im Querschnitt ebenfalls rechtwinklige Einschnitte 96 und 97, die auch als Ringnuten betrachtet werden können und die durch einen Steg 98 voneinander getrennt sind.

Die axiale Breite des Steges 98 ist gleich der axialen Breite des Ringkanalabschnitts 72 an der Büchse 14. Der Einschnitt 96, der sich auf derselben Seite des Steges 98 befindet wie der Ringkanalabschnitt 71 bezüglich des mittleren Ringkanalabschnitts 72, ist wesentlich länger als der Ringkanalabschnitt 71, während der Einschnitt 97 kürzer als der Ringkanalabschnitt 73 ist. In Schließposition des Hauptkolbens 16 liegen sich der Ringkanalabschnitt 72 an der Büchse 14 und der Steg 98 des Hauptkolbens 16 radial genau gegenüber. Zwischen ihnen besteht dann ein enger Freiraum, dessen radiale Breite der Ringkanalabschnitt 72 bestimmt. In Figur 1 ist die radiale Breite des Freiraums mit x bezeichnet.

In dem Hauptkolben 16 ist ferner eine Steueröldüse 7 in einer axial verlaufenden Sackbohrung 69, die zur Einströmbohrung 18 hin offen ist, vorgesehen. Die Sackbohrung 69 verläuft entlang der Mittelachse des Hauptkolbens 16 und setzt sich in einer Radialbohrung 60 fort, die radial nach außen in den Einschnitt 96 mündet. Ferner ist in dem Hauptkolben 16 eine Dämpfungsdüse 74 vorgesehen, die in einem Kanal angeordnet ist, der sich aus einer zum Steuerraum 22 hin offenen Axialbohrung 77 und aus einer Radialbohrung 78, die im Steg 98 nach außen mündet, zusammensetzt. Die Axialbohrung 77 verläuft entlang der Mittelachse des Hauptkolbens 16.

Die Aufgabe der Dämpfungsdüse 74 ist es, den Regelhub des Hauptkolbens 16 zu dämpfen, um zu verhindern, daß das Ventil 101 schwingt. Die Dämpfungsdüse 74 wirkt als hydraulischer Widerstand über den gesamten Hub des Hauptkolbens 16. Ein weiterer hydraulischer Widerstand wird durch die Radialbohrung 78 und den Abschnitt 72 des Ringkanals 70 gebildet. Dieser hydraulische Widerstand ist nur im eingezeichneten Hubbereich y (kleiner Volumenstrom, hoher Druck) des Hauptkolbens 16 wirksam. Bei einem größeren Hub des Hauptkolbens 16 kommt die Radialbohrung 78 aus dem Bereich des Ringkanalabschnitts heraus und öffnet sich zum Ringkanalabschnitt 73 der Büchse 14. In dem Hubbereich y wirkt also eine Kombination von zwei hintereinander geschalteten hydraulischen Widerständen, nämlich die Düse 74 und der durch die Radialbohrung 78 und den Ringkanalabschnitt 72 gebildete und nach dem Prallplattenprinzip arbeitende hydraulische Widerstand als effektive Dämpfungsdüse. Der vom Kolbenhub abhängige effektive Drosselquerschnitt ist nun in dem Hubbereich y kleiner und damit der hydraulische Gesamtwiderstand größer ausgebildet als der Drosselquerschnitt der Düse 74 und damit deren hydraulischer Einzelwiderstand. Dies hat eine Stabilisierung des Ventils 101 im Bereich kleiner Volumenströme mit hohem Druck zur Folge. Dadurch, daß der durch die Radialbohrung 78 und den Ringkanalabschnitt 72 gebildete hydraulische Widerstand nicht über den gesamten Kolbenhub wirksam ist, werden bei großen Volumenstromänderungen unzulässig hohe Druckspitzen bzw. Druckeinbrüche vermieden, was die Dynamik des Ventils verbessert. Selbstverständlich beeinflußt der Querschnitt der Bohrungen 77 und 78 ebenfalls die Dämpfung des Hauptkolbens 16.

## Patentansprüche

1. Vorgesteuertes Proportional-Druckbegrenzungsventil mit einem Pilotventil (3), mit einem in einem Hohlteil (14) angeordneten Hauptkolben (16), der von einer in einem Steuerraum (22) angeordneten Schließfeder (17) in Schließrichtung vorgespannt ist und von einem im Steuerraum (22) herrschenden Druck in Schließrichtung und von einem in einem Einströmeingang (18) herrschenden Druck in Öffnungsrichtung beaufschlagbar ist, mit Steueröldüsenmitteln (7) in einem Fluidpfad zwischen dem Einströmeingang (18) und dem Pilotventil (3) und mit Dämpfungsdüsenmitteln in einem über den Hauptkolben (16) führenden Fluidpfad zwischen dem Steuerraum (22) und dem Pilotventil (3), **dadurch gekennzeichnet,** daß der hydraulische Gesamtwiderstand der Dämpfungsdüsenmittel (9) abhängig vom Hub des Hauptkolbens (16) veränderbar ist, wobei die Dämpfungsdüsenmittel eine Radialbohrung (78) des Hauptkolbens (16) umfassen und die Radialbohrung (78) in der Schließstellung des Hauptkolbens (16) im Bereich eines radial engen Ringspaltes (72) zwischen dem Hauptkolben (16) und dem Hohlteil (14) und nach einem bestimmten Hub des Hauptkolbens (16) im Bereich eines radial breiten Ringspaltes (73) zwischen dem Hauptkolben (16) und dem Hohlteil (14) nach außen mündet.

2. Vorgesteuertes Proportional-Druckbegrenzungsventil, **dadurch gekennzeichnet,** daß die Dämpfungsdüsenmittel desweiteren eine Festdüse (74) umfassen, die im Hauptkolben (16) zwischen der Radialbohrung (78) und dem Steuerraum (22) angeordnet ist.

3. Vorgesteuertes Proportional-Druckbegrenzungsventil nach Anspruch 1 oder 2, **dadurch gekennzeichnet,** daß das Hohlteil (14) eine Ringnut (73) aufweist, deren Durchmesser am Nutgrund zur Bildung des breiten Ringspaltes wesentlich größer als der Durchmesser des Hauptkolbens (16) im Mündungsbereich der Radialbohrung (78) ist.

4. Vorgesteuertes Proportional-Druckbegrenzungsventil nach Anspruch 3, **dadurch gekennzeichnet,** daß der Hauptkolben (16) benachbart zum Mündungsbereich der Radialbohrung (78) eine Ringnut (96) aufweist, die stromab der Steueröldüsenmittel (7) im Fluidpfad zwischen dem Einströmeingang (18) und dem Pilotventil (3) liegt und nach einem bestimmten Hub des Hauptkolbens (16) mit der Ringnut (73) des Hohlteils (14) in Überdeckung kommt.

## Claims

1. A pilot operated proportional pressure limiting valve with a pilot valve (3), with a main spool (16), arranged within a hollow part (14), which is pretensioned in the closing direction by a closing spring (17) arranged within a control chamber (22) and which can be acted upon in the closing direction by a pressure prevailing in the control chamber (22) and in the opening direction by a pressure prevailing in a flow inlet (18), with control oil nozzle means (7) in a fluid path running between the flow inlet (18) and the pilot valve (3), and with damping nozzle means in a fluid path running via the main spool (16) between the control chamber (22) and the pilot valve (3), **characterized in that** the overall hydraulic resistance of the damping nozzle means (9) can be varied as a function of the stroke of the main spool (16), whereby the damping nozzle means comprise a radial bore (78) of the main spool (16) which, in the closed position of the main spool (16), debouches outwards in the region of a radially narrow annular gap (72) between the main spool (16) and the hollow part (14) and, after a certain stroke of the main spool (16), debouches outwards in the region of a radially wide annular gap (73) between the main spool (16) and the hollow part (14).

2. A pilot operated proportional pressure limiting valve **characterized in that** the damping nozzle means further comprise a fixed nozzle (74) arranged in the main spool (16) between the radial bore (78) and the control chamber (22).

3. A pilot operated proportional pressure limiting valve according to Claim 1 or 2, **characterized in that** the hollow part (14) has an annular groove (73), the diameter of which at the groove root forming the wide annular gap is substantially larger than the diameter of the main spool (16) at the mouth of radial bore (78).

4. A pilot operated proportional pressure limiting valve according to Claim 3, **characterized in that** the main spool (16) has, adjacent to the mouth of the radial bore (78), an annular groove (96) lying downstream of the control oil nozzle means (7) in the fluid path between the flow inlet (18) and the pilot valve (3) and which, after a certain stroke of the main spool (16), overlaps with the annular groove (73) of the hollow part (14).

## Revendications

1. Un limiteur de pression proportionnel piloté, doté d'une valve (3) de pilotage, doté, disposé à l'intérieur d'un élément (14) creux, d'un tiroir (16) principal, lequel est précontraint dans le sens de sa fermeture par un ressort (17) de fermeture disposé dans une chambre (22) de pilotage et lequel peut être sollicité dans le sens de sa fermeture par la pression régnant dans une chambre (22) de pilotage et dans le sens de son ouverture par la pression régnant dans une entrée (18) de flux amont, doté d'équivalents de gicleurs (7) d'huile de pilotage sur un parcours du fluide de l'entrée (18) de flux amont vers la valve (3) de pilotage, ainsi que d'équivalents de gicleurs d'amortissement sur un parcours du fluide de la chambre (22) de pilotage vers la valve (3) de pilotage en passant par le tiroir (16) principal, **caractérisé en ce que** la résistance hydraulique totale des équivalents de gicleurs (9) d'amortissement peut être amenée à varier en fonction de la course du tiroir (16) principal, cependant que les équivalents de gicleurs d'amortissement comportent un forage (78) radial dans le tiroir (16) principal et que ce forage (78) radial débouche vers l'extérieur, à proximité d'un passage (72) annulaire étroit entre le tiroir (16) principal et l'élément (14) creux pour la position de fermeture du tiroir (16) principal et à proximité d'un passage (73) radial large entre le tiroir (16) principal et l'élément (14) creux après une course donnée du tiroir (16) principal.

2. Un limiteur de pression proportionnel piloté, **caractérisé en ce que** de surcroît les équivalents de gicleurs comprennent un gicleur (74) fixe, lequel est disposé dans le tiroir (16) principal entre le forage (78) radial et la chambre (22) de pilotage.

3. Un limiteur de pression proportionnel piloté conforme à la revendication n°1 ou n° 2, **caractérisé en ce que** l'élément (14) creux présente une rainure (73) annulaire, dont le diamètre mesuré au fond de la rainure servant à former le passage radial large est nettement supérieur au diamètre du tiroir (16) principal mesuré à proximité de l'embouchure du forage (78) radial.

4. Un limiteur de pression proportionnel piloté conforme à la revendication n° 3, **caractérisé en ce que,** à proximité de l'embouchure du forage (78) radial, le tiroir (16) principal présente une rainure (96) annulaire, laquelle est placée en aval des équivalents de gicleurs (7) d'huile de pilotage sur le parcours du fluide de l'entrée (18) de flux amont vers la valve (3) de pilotage et laquelle entre en recouvrement avec la rainure (73) annulaire de l'élément (14) creux après une course donnée du tiroir (16) principal.
